(19)

Europäisches
Patentamt

European
Patent Office

Office européen
des brevets

(11) **EP 2 988 146 A1**

(12) **EUROPEAN PATENT APPLICATION**

(43) Date of publication:
**24.02.2016 Bulletin 2016/08**

(21) Application number: **15179439.3**

(22) Date of filing: **31.07.2015**

(51) Int Cl.:
*G01S 5/02* *(2006.01)*          *G01S 5/06* *(2006.01)*
*G01S 13/87* *(2006.01)*          *G01S 13/74* *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **18.08.2014   US 201414462181**

(71) Applicant: **Digi International Inc.
Minnetonka, MN 55343 (US)**

(72) Inventor: **SCHAFFNER, Terry Michael
Warrenville, IL 60555 (US)**

(74) Representative: **Curley, Donnacha John et al
Hanna Moore + Curley
13 Lower Lad Lane
Dublin 2, D02 T668 (IE)**

(54) **SYSTEM AND METHOD FOR LOCATING A RADIO TAG**

(57)     A system comprises a target node having an unknown location and at least three reference nodes within communication range of the target node. Each of the reference nodes has a known location. At least one of the reference nodes is configured to initiate a two-way time of flight transaction with one or more of the other reference nodes by transmitting a respective request to the one or more other reference nodes. Each of the reference nodes is configured to transmit a reply in response to a received request. The target node is configured to observe the request and reply of each two-way time of flight transaction and to determine a respective time differential between when the target node received each respective request and its corresponding reply of each observed two-way time of flight transaction.

EP 2 988 146 A1

**Description**

BACKGROUND

Various methods have been used to locate the position of a tag or node. For example, the Global Positioning System (GPS) can be used to locate a tag. However, GPS requires line of sight communication with satellites, which, in some applications, is not available. The power consumption and initial latency required to acquire and track the satellites may also be a serious deficiency.

Additionally, low cost, non-synchronized devices have also been used for location purposes. In such systems, the radio frequency (RF) time of flight is measured using a two-way, round-trip packet exchange between the tag and a node of known location. By performing this measurement with several nodes of known location, the tag may be located in a two-dimensional (2D) or three-dimensional (3D) coordinate system using known trilateration methods. This method requires multiple packet transmissions from the tag which increases energy consumption. It also results in a considerable amount of over-the-air traffic as the number of tags in the system increases.

SUMMARY

In one embodiment, a system is provided. The system comprises a target node having an unknown location and at least three reference nodes within communication range of the target node. Each of the reference nodes has a known location. At least one of the reference nodes is configured to initiate a two-way time of flight transaction with one or more of the other reference nodes by transmitting a respective request to the one or more other reference nodes. Each of the reference nodes is configured to transmit a reply in response to a received request. The target node is configured to observe the request and reply of each two-way time of flight transaction and to determine a respective time differential between when the target node received each respective request and its corresponding reply of each observed two-way time of flight transaction.

The Application extends to include the following numbered statements:

1. A communication system (100) comprising:

a target node (104) having an unknown location; and
at least three reference nodes (102) within communication range of the target node (104), each of the reference nodes (102) having a known location;
wherein at least one of the reference nodes (102) is configured to initiate a two-way time of flight transaction with one or more of the other reference nodes (102) by transmitting a respective request to the one or more other reference nodes (102); wherein each of the reference nodes (102) is configured to transmit a reply in response to a received request;
wherein the target node (104) is configured to observe the request and reply of each two-way time of flight transaction;
wherein the target node (104) is further configured to determine a respective time differential between when the target node (104) received each respective request and its corresponding reply of each observed two-way time of flight transaction.

2. The communication system (100) of statement 1, wherein each of the reference nodes (102) has a known fixed location.

3. The communication system (100) of statement 1, wherein the target node (104) is configured to calculate an estimated distance between the reference nodes (102) based on the known locations of the reference nodes (102).

4. The communication system (100) of statement 1, wherein each of the reference nodes (102) which initiates a two-way time of flight transaction is configured to transmit a signal containing a respective round trip delay after receiving a reply from the corresponding reference node (102);

wherein the target node (104) is configured to obtain the calculated round trip delay from the signal and to use the calculated round trip delay in estimating a distance between the respective reference nodes (102) corresponding to the round trip delay.

5. The communication system (100) of statement 1, wherein the target node (104) is further configured to calculate an estimated position of the target node (104) based on the known locations of the reference nodes (102) and the respective time differential for each observed two-way time of flight transaction.

6. The communication system (100) of statement 5, wherein the target node (104) is configured to calculate an estimated position of the target node (104) by solving a system of equations in which each of the equations in the system of equations is arranged to be dependent on the same unknown value representing a time of flight between the target node (104) and a first reference node (102) of the at least three reference nodes (102).

7. The communication system (100) of statement 1, wherein the target node (104) is configured to communicate the respective time differential determined for each observed two-way time of flight transaction to one or more of the reference nodes (102).

8. A method (300) of determining a physical position of a target node (104) in a wireless network, the method (300) comprising:

> observing (302), at the target node (104), at least three request signals transmitted from a respective requesting reference node (102) to a respective responding reference node (102), each requesting reference node (102) and responding reference node (102) having a known location;
> observing (304), at the target node (104), at least three reply signals corresponding to a respective one of the at least three request signals, the at least three reply signals transmitted from a respective responding reference node (102) such that the target node (104) observes at least three distinct two-way time of flight transactions; and
> determining (306), at the target node (104), a respective differential time of flight measurement for each two-way time of flight transaction, each respective differential time of flight measurement indicating the time between observing a respective one of the at least three request signals and observing the corresponding one of the at least three reply signals.

9. The method (300) of statement 8, wherein each of the requesting reference nodes (102) and the responding reference nodes (102) has a fixed known position.

10. The method (300) of statement 8, further comprising:

> obtaining, at the target node (104), the known position of each of the requesting reference nodes (102) and the responding reference nodes (102) from signals transmitted from the corresponding requesting reference nodes (102) and responding reference nodes (102).

11. The method (300) of statement 8, further comprising:

> calculating (308), at the target node (104), an estimated time of flight between the reference nodes (102) of each two-way time of flight transaction based on the known locations of the reference nodes (102).

12. The method (300) of statement 8, further comprising:

> transmitting a signal from the respective requesting reference node (102) for each two-way time of flight transaction after receiving a reply from the corresponding responding reference node (102), the signal containing a respective round trip delay;
> obtaining, at the target node (104), the calculated round trip delay from the signal.

13. The method (300) of statement 8, further comprising:

> calculating, at the target node (104), the physical position of the target node (104) based on the respective differential time of flight measurement for each two-way time of flight transaction and on the known position of each requesting reference node (102) and the known position of each responding reference node (102).

14. The method (300) of statement 8, further comprising:

> communicating the respective time differential determined for each observed two-way time of flight transaction from the target node (104) to one or more of the reference nodes (102).

15. The method (300) of statement 8, wherein each of the at least three request signals comprises a range request signal.

16. A program product comprising a processor-readable medium on which program instructions are embodied, wherein the program instructions are configured, when executed by at least one programmable processor (201) in a target node (104) having an unknown location, to cause the at least one programmable processor (201) to:

> observe (302, 304) at least three two-way time of flight transactions, wherein each two-way time of flight transaction includes a request sent from one of a plurality of reference nodes (102) and reply sent from another of the plurality of reference nodes (102), each reference node (102) having a known location; and

determine (306) a respective differential time of flight measurement for each two-way time of flight transaction, each respective differential time of flight measurement indicating the time between observing the respective request and corresponding reply for each respective two-way time of flight transaction.

17. The program product of statement 16, wherein the program instructions are further configured to cause the at least one programmable processor (201) to obtain the known location of each of the plurality of reference nodes (102) from signals transmitted from the corresponding reference nodes (102).

18. The program product of statement 16, wherein the program instructions are further configured to cause the at least one programmable processor (201) to calculate (308) an estimated time of flight between the reference nodes (102) of each two-way time of flight transaction based on the known locations of the reference nodes (102).

19. The program product of statement 16, wherein the program instructions are further configured to cause the at least one programmable processor (201) to obtain a respective calculated round trip delay for each two-way time of flight transaction from a signal transmitted from one or more of the reference nodes (102).

20. The program product of statement 16, wherein the program instructions are further configured to cause the at least one programmable processor (201) to calculate a physical position of the target node (104) based on the respective differential time of flight measurement for each two-way time of flight transaction and on the known location of the plurality of reference nodes (102).

DRAWINGS

Understanding that the drawings depict only exemplary embodiments and are not therefore to be considered limiting in scope, the exemplary embodiments will be described with additional specificity and detail through the use of the accompanying drawings, in which:

Figures 1A-1E depict a high level block diagram of one embodiment of an exemplary communications system.

Figure 2 is a block diagram of one embodiment of an exemplary tag or target communication node.

Figure 3 is a flow chart depicting one embodiment of an exemplary method of estimating a location of a tag.

In accordance with common practice, the various described features are not drawn to scale but are drawn to emphasize specific features relevant to the exemplary embodiments.

DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

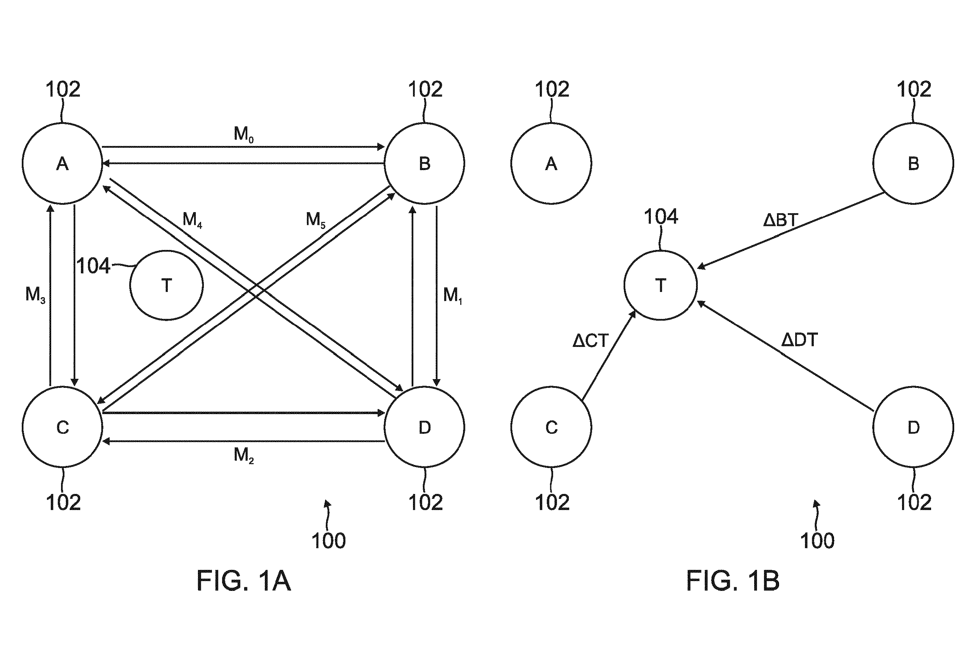

Figures 1A-1E depict a high level block diagram of one embodiment of an exemplary communications system 100. The system 100 includes a plurality of reference nodes 102 having a known location. In the example shown in Figures 1A-1E, system 100 includes four reference nodes labeled as nodes A, B, C, and D. However, it is to be understood that three reference nodes or more than four reference nodes can be used in other embodiments. For example, in order to compute an unambiguous 2 dimensional location of a tag or target node 104, only three reference nodes 102 are required. However, to compute an unambiguous 3 dimensional location of the tag 104, at least four reference nodes 102 are needed. In some embodiments, the reference nodes 102 are each located in a respective fixed location. That is, the location of the reference nodes 102 does not change. In other embodiments, the location of one or more of the reference nodes 102 can change. However, in such embodiments, the respective location of each reference node is known and does not change during the process of determining the location of a node or tag 104 (labelled as node T in Figures 1A-1E) whose location is unknown. The nodes can be implemented as various communication devices, such as, but not limited to, mobile phones, base stations, sensors configured to communicate wirelessly, etc.
Each reference node 102 is configured to perform 2-way time of flight transactions with other reference nodes within communication range. As used herein a 2-way time of flight transaction refers to an exchange of signals or packets between two nodes in which one signal is a response to the other with a precise, known delay between the receipt of the initial signal and sending of the reply from the second node. For example, a range request sent from one node and the accompanying range reply from another node is one example of a 2-way time of flight transaction. As used herein, the terms signal and packet can be used interchangeably. The second node introduces a precise, known delay by estimating the earliest arrival time of the signal and then transmitting a reply signal synchronous to this estimate at a fixed time later. Alternatively, the node may transmit the reply synchronous to its own reference clock and embed a fine timing offset value within the reply frame to convey the true timing of the signal to the receiving node.

Thus, in the example topology shown in Figure 1A, the four reference nodes 102 perform a total of six 2-way time of flight transactions (labeled $M_0$ through $M_5$) with one another. However, only three transactions using all four nodes is required for a 3-dimesional (3D) location measurement, as described in more detail below. The tag 104 listens in on the exchange of packets used for performing 2-way time of flight transactions that are within communication range of the tag 104.

In this example, the 2-way time of flight transactions are implemented as range request and reply packets. The range request and reply packets are unicast frames directed to a specific node in this example. Typically, nodes that are not identified as the destination node would discard the packets. However, in this example, the tag 104 is configured to ignore the destination address in the range request and range reply packets and not discard the packets. Although the tag 104 ignores the destination address for a decision to discard the packet or not, the tag 104 does not send a reply packet unless the destination address in the range request packet matches the address of the tag 104.

In other embodiments, the range request and reply packets are broadcast frames. In such embodiments, the destination address is embedded in the payload of the range request packets so that the addressed node is able to reply with a range reply packet. In each of the above exemplary embodiments, the range request and reply packets behave as unicast frames between the two nodes performing the range request/reply transaction, and as broadcast frames to the tag 104.

As noted above, the tag 104 listens in on the packet exchange for range request/reply transactions within communication range of the tag 104. In this example, node B, node C, and node D, each initiate a respective transaction by transmitting a range request to node A. However, it is to be understood that other range request/reply transactions can be used in other embodiments. As depicted in Figure 1B, the tag 104 receives the respective range request from each of nodes B, C, and D. There is a respective time delay associated with each range request between the time the request is sent and the time that it is received. The time delay is due to the distance between the tag 104 and the respective node B, C, or D. The time delays are labelled ΔBT, ACT, and ΔDT in Figure 1B.

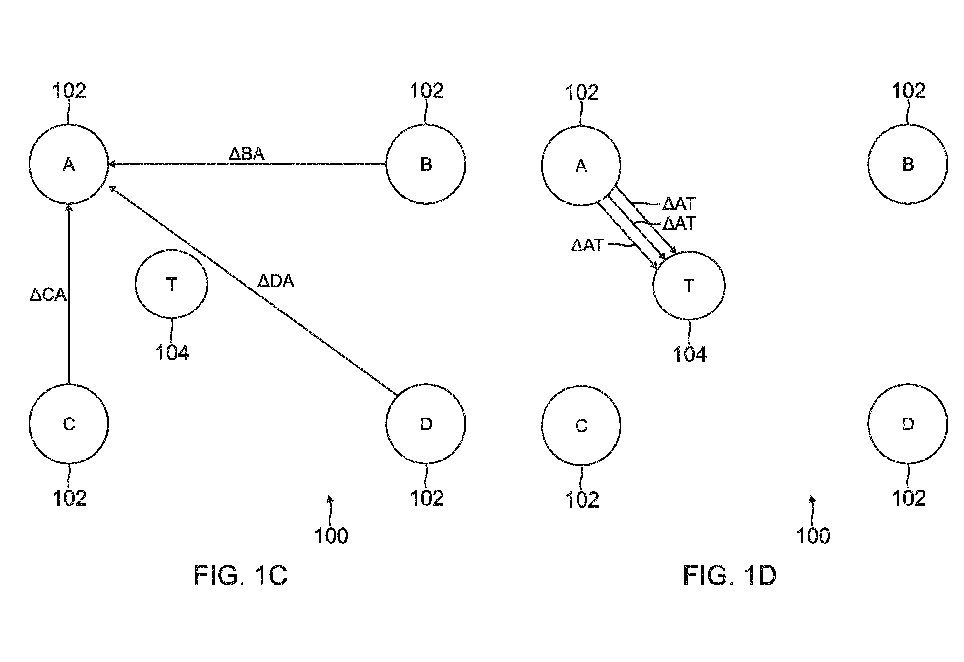

The respective range requests are also received by reference node A. There is also a respective time delay associated with each range request due to the distance between the reference node A and the respective node B, C, or D. These time delays are labelled as ΔBA, ΔCA, and ΔDA in Figure 1C. Upon receiving the respective range request from each of the nodes B, C, and D, the node A transmits a respective range reply to each of nodes B, C, and D. As depicted in Figure 1D, the tag 104 receives each of the range replies. Since the distance between the node A and the tag 104 is the same for each of the range replies, the time delay between the time the respective reply is sent and received is the same for each of the range replies. This time delay is labelled as ΔAT in Figure 1D.

In one embodiment, the tag 104 conveys or communicates the time difference of arrival measurements to one or more of the reference nodes 102. In such an embodiment, the tag 104 does not compute its own location, but the reference nodes 102, or other processing units on the network, perform the location computation. In other embodiments, the tag 104 is configured to compute its location. For example, in some embodiments, the reference nodes 102 include their location information in transmitted packets. For example, the location information can be included in the range request and reply packets or in other packets transmitted by the reference nodes 102. The location information may be expressed in a 2 or 3 dimensional coordinate system, such as longitude, latitude, and elevation. The tag 104 is configured to compute its location, in some such embodiments, based on the time delays discussed above and the known locations of nodes A, B, C, and D. In particular, the tag 104 uses a differential time measurement between the time that each range request is received at the tag 104 and the time that the respective range reply is received at the tag 104. In this way, the tag 104 does not need to synchronize its local clock with a clock in one of the reference nodes 102. For example, in the embodiment shown in Figures 1A-1E, the respective time that each of the range requests is received can be expressed as follows:

$$T_{BT} = \alpha + \Delta BT;$$

$$T_{CT} = \beta + \Delta CT;$$

$$T_{DT} = \gamma + \Delta DT$$

In other words, the time that the range request from node B is received is equal to some initial time $\alpha$ at which

the range request was sent from node B plus the time delay ΔBT. Similarly, the time that the range request from node C is received is equal to some initial time β plus the time delay ACT. The time that the range request from node D is received is equal to some initial time γ plus the time delay ΔDT. The time that the respective range replies are received can be expressed through similar equations as shown below:

$$T_{BAT} = \alpha + \Delta BA + \Delta AT;$$

$$T_{CAT} = \beta + \Delta CA + \Delta AT;$$

$$T_{DAT} = \gamma + \Delta DA + \Delta AT$$

It should be noted that there is also a known, fixed delay between the arrival of the request signal and the transmission of the reply signal. This known delay is subtracted from the reply timing measurements, and, for simplicity, is not included in the above equations. The time differential for each of the above transactions can then be expressed as follows:

$$T_{BAT} - T_{BT} = (\alpha + \Delta BA + \Delta AT) - (\alpha + \Delta BT) = \Delta BA + \Delta AT - \Delta BT;$$

$$T_{CAT} - T_{CT} = (\beta + \Delta CA + \Delta AT) - (\beta + \Delta CT) = \Delta CA + \Delta AT - \Delta CT;$$

$$T_{DAT} - T_{DT} = (\gamma + \Delta DA + \Delta AT) - (\gamma + \Delta DT) = \Delta DA + \Delta AT - \Delta DT$$

Thus, the time differential measurements are not dependent on the actual respective initial time α, β, or γ. Since the time differential measurements are not dependent on the actual respective initial time, the clock in the tag 104 does not need to be synchronized with the clock in one of the reference nodes 102. Thus, the technique described herein does not rely on precision timing from the reference nodes with finely synchronized reference oscillators. This is advantageous as such accuracy is difficult to maintain wirelessly and requires a master node to which the timing is synchronized which does not work well with mesh networks.

In addition, the time delays ΔBA, ΔCA, and ΔDA are known or can be estimated from the known locations of the nodes A, B, C, and D. The actual time differentials, e.g. $T_{BAT}-T_{BT}$, are also known measured values. Hence, the time differential equations can be re-written as follows:

$$\Delta BT = \Delta AT - (T_{BAT} - T_{BT} - \Delta BA) = \Delta AT - N_{BAT};$$

$$\Delta CT = \Delta AT - (T_{CAT} - T_{CT} - \Delta CA) = \Delta AT - N_{CAT};$$

$$\Delta DT = \Delta AT - (T_{DAT} - T_{DT} - \Delta DA) = \Delta AT - N_{DAT};$$

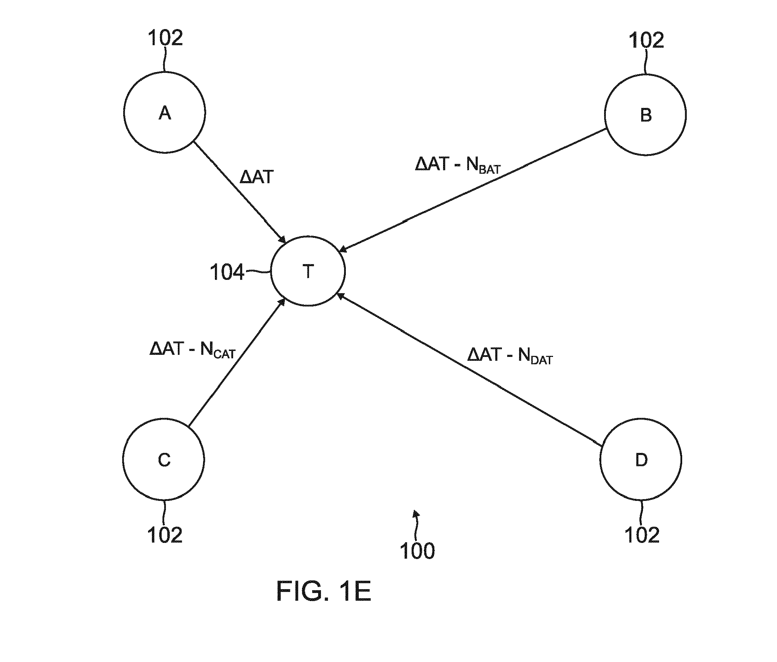

Using the rewritten equations, the time delay between each reference node 102 and the tag 104 can be expressed in terms of the time delay between node A and the tag 104, as shown in Figure 1E. The distance between the tag 104 and each respective reference node 102 can be expressed in three dimensions using the following equations:

$$\sqrt{(X_T - X_A)^2 + (Y_T - Y_A)^2 + (Z_T - Z_A)^2} = c(\Delta AT);$$

$$\sqrt{(X_T - X_B)^2 + (Y_T - Y_B)^2 + (Z_T - Z_B)^2} = c(\Delta AT - N_{BAT});$$

$$\sqrt{(X_T - X_C)^2 + (Y_T - Y_C)^2 + (Z_T - Z_C)^2} = c(\Delta AT - N_{CAT});$$

$$\sqrt{(X_T - X_D)^2 + (Y_T - Y_D)^2 + (Z_T - Z_D)^2} = c(\Delta AT - N_{DAT})$$

It is to be understood that the X, Y, and Z, values are the coordinates of the respective node. For example, $(X_T, Y_T, Z_T)$ are the unknown coordinates of the tag 104 and $(X_A, Y_A, Z_A)$ are the known coordinates of node A. The variable c represents the speed of light. Thus, there are four unknown values $(X_T, Y_T, Z_T, \Delta AT)$ and four equations. It is to be understood that the distances can also be expressed in two dimensions. In such embodiments, the equations would be similar, but omit the Z terms. For two dimensions, there would be three unknown values $(X_T, Y_T, \Delta AT)$.

In each case, the system of equations can be solved using technique known to one of skill in the art. For example, the tag 104 can be configured to use a least squares error algorithm to locate the tag 104 on a 2-dimensional (2D) or 3-dimensional (3D) grid based on the measured time differential values and the known locations of the reference nodes 102. For continuous tracking applications position of the tag 104 may be updated each time a transaction is received and a new differential time of flight value is calculated. In such embodiments, the tag 104 calculates the location based on the most recent set of differential values.

The impact on the location accuracy due to inaccuracies of the individual reference clocks in the tag 104 and nodes 102 is reduced through the techniques discussed above. This is because the need for aligning the clocks is alleviated through the use of differential time-of-flight measurements. However, oscillator inaccuracies of the radio transceivers of the nodes 102 and tag 104 can have a significant impact on the overall accuracy of the measurements. In order to compensate for oscillator inaccuracies, the tag 104 measures the frequency offsets of the range request and range reply frames in some embodiments. Based on the frequency offsets, the tag 104 computes the relative inaccuracies of the reference oscillators on the two fixed nodes 102 relative to its own reference oscillator. Based on this information, the tag 104 can then adjust the time delay estimates to compensate for the oscillator inaccuracies. In embodiments computing the frequency offsets, the baseband processing in the tag 104 operates with a clock locked to the local oscillator.

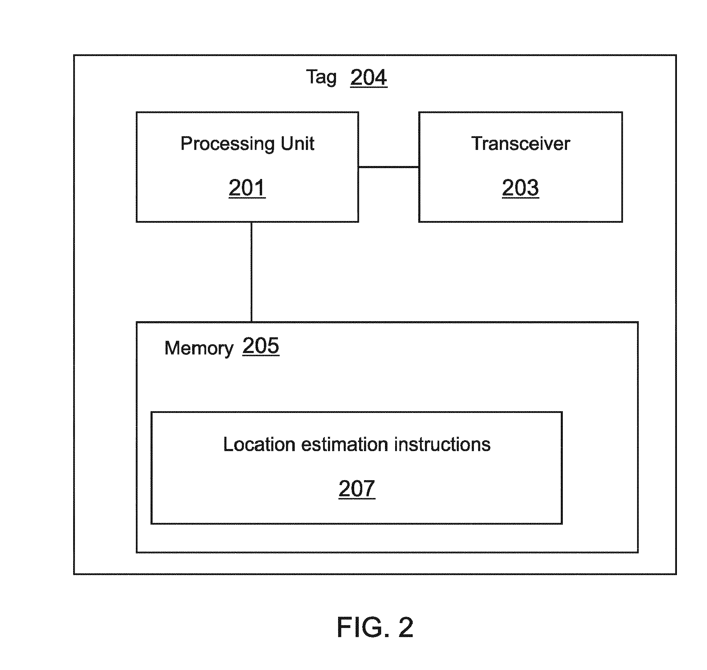

Figure 2 is a block diagram of one embodiment of an exemplary tag or target communication node 204. The tag 204 is configured to estimate its own location by using differential time of flight information observed from the transmissions of other nodes performing 2-way time of flight transactions between themselves, as described above. The tag 204 comprises a processing unit 201, a radio transceiver 203, and a memory 205. The radio transceiver is configured to receive and transmit radio frequency (RF) signals. The processing unit 201 includes or functions with software programs, firmware or other computer readable instructions for carrying out various methods, process tasks, calculations, and control functions, used in the calculating a location estimate based on the observed differential time of flight information, as described above.

These instructions are typically stored on any appropriate computer readable medium used for storage of computer readable instructions or data structures. The computer readable medium can be implemented as any available media that can be accessed by a general purpose or special purpose computer or processor, or any programmable logic device. Suitable processor-readable media may include storage or memory media such as magnetic or optical media. For example, storage or memory media may include conventional hard disks, Compact Disk - Read Only Memory (CD-ROM), volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc. For example, in this embodiment, location estimation instructions 207 are stored on memory 205.

A range request sent by another node is received by the transceiver 203 and provided to the processing unit 201. If a destination address in the range request is the same as the address of the tag 204, the processing unit 201 causes the transceiver 203 to send a range reply. If the destination address does not match the address of the tag 204, the processing unit 201 does not discard the range request. Rather the location estimation instructions 207 cause the processing unit 201 to store in the memory 205, the time at which the range request was received as indicated by the transceiver 203. After the transceiver 203 receives the range reply intended for the node which originally sent the range request, the location estimation instructions 207 cause the processing unit 201 to calculate a time difference between the time the range reply was received and the time the range request was received.

In addition, the location of the nodes which sent the range reply and range request is known. For example, in some embodiments, the processing unit 201 obtains the known location of the nodes by extracting the information from the range request and range reply or from other signals transmitted by the nodes. The location estimation instructions 207 then cause the processing unit to calculate the estimated location of the tag 204 using the process and techniques described herein based on the differential time of flight measurements obtained from communications between a plurality of nodes having a known location. During the process of calculating an estimated location, the tag 204 does not need to transmit any signals which reduces the amount of power consumed by the tag 204 as compared to other functions or location techniques which require the tag 204 to transmit signals.

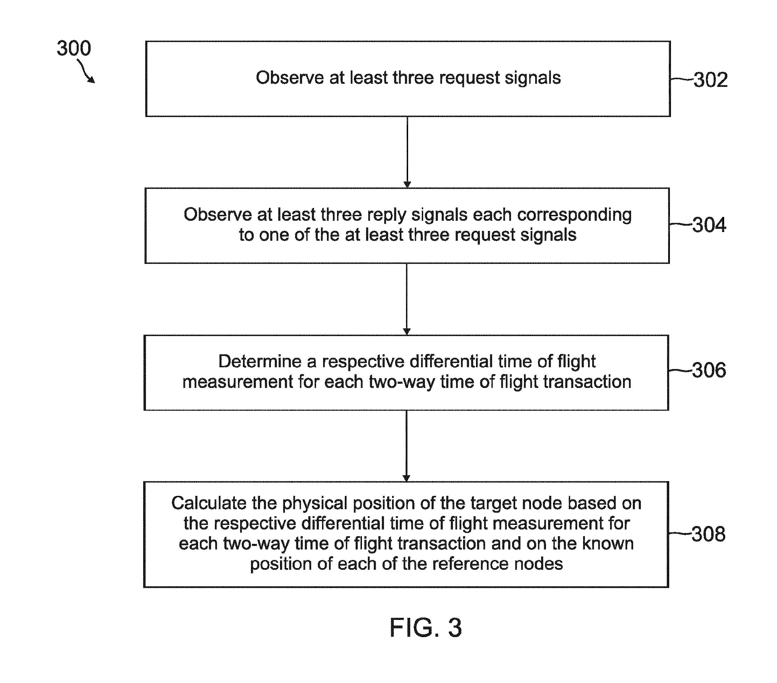

Figure 3 is a flow chart depicting one embodiment of an exemplary method 300 of estimating a location of a tag. The method 300 can be implemented in a tag or target communication node, such as tag 104 or tag 204 above. At block 302, at least three request signals are observed by the target node. As used herein, observing a signal refers to performing some processing, such as recording the time the signal was received, even though the signal is not addressed to the target node. The at least three request signals are each transmitted from a respective requesting reference node. A requesting reference node is a node that initiates a request, such as a range request. In some embodiments, a single reference node initiates each request. In other embodiments, different reference nodes initiate each request. In addition, a given reference node can be a requesting reference node for one two-way time of flight transaction and a responding reference node for another two-way time of flight transaction, in some embodiments. At block 304, at least three reply signals each corresponding to one of the at least three request signals is observed by the target node. The reply signals are transmitted from a responding reference node in response to receiving a request signal addressed to the respective responding reference node. Each reply signal is addressed to the respective requesting reference node which sent the corresponding request. Each of the reference nodes, requesting and responding, has a known physical location or position. Hence, through blocks 302 and 304, the target node observes at least three distinct two-way time of flight transactions. A two-way time of flight transaction is distinct from another two-way time of flight transaction if one of the two-way time of flight transactions involves at least one reference node that is not part of the other two-way time of flight transaction.

At block 306, a respective differential time of flight measurement for each two-way time of flight transaction is determined. Each respective differential time of flight measurement indicates the time between observing the request and reply signals of the respective two-way time of flight transaction. At block 308, the physical position of the target node is calculated based on the respective differential time of flight measurement for each two-way time of flight transaction and on the known position of each of the reference nodes. In some embodiments, the target node estimates a time of flight between the reference nodes for each two-way time of flight transaction. The time of flight or delay between the reference nodes can also be used for determining the location of the target node, as described above. In other embodiments, the reference node which initiated the request will send a signal indicating the round trip delay after receiving the reply from the responding reference node. The target node extracts the round trip delay from the observed signal sent from the requesting reference node in some such embodiments.

In addition, in some embodiments, the target node calculates the position of the target node by solving a system of equations in which each of the equations in the system of equations is arranged to be dependent on the same unknown value representing a time of flight between the target node and a first reference node, as discussed above. The first reference node is one of the requesting or responding reference nodes. In some embodiments, the system of equations is solved by calculating a least squares estimate, as discussed above. In other embodiments, the target node communicates the respective time differential determined for each observed two-way time of flight transaction to one or more of the reference nodes. The one or more reference nodes then calculate the position of the target node based on the respective determined time differential for each observed two-way time of flight transaction.

EXAMPLE EMBODIMENTS

Example 1 includes a system comprising: a target node having an unknown location; and at least three reference nodes within communication range of the target node, each of the reference nodes having a known location; wherein at least one of the reference nodes is configured to initiate a two-way time of flight transaction with one or more of the other reference nodes by transmitting a respective request to the one or more other reference nodes; wherein each of the reference nodes is configured to transmit a reply in response to a received request; wherein the target node is configured to observe the request and reply of each two-way time of flight transaction; wherein the target node is further configured to determine a respective time differential between when the target node received each respective request and its corresponding reply of each observed two-way time of flight transaction.

Example 2 includes the communication system of Example 1, wherein each of the reference nodes has a known fixed location.

Example 3 includes the communication system of any of Examples 1-2, wherein the target node is configured to calculate an estimated distance between the reference nodes based on the known locations of the reference nodes.

Example 4 includes the communication system of any of Examples 1-3, wherein each of the reference nodes which initiates a two-way time of flight transaction is configured to transmit a signal containing a respective round trip delay after receiving a reply from the corresponding reference node; wherein the target node is configured to obtain the calculated round trip delay from the signal and to use the calculated round trip delay in estimating a distance between the respective reference nodes corresponding to the round trip delay.

Example 5 includes the communication system of any of Examples 1-4, wherein the target node is further configured to calculate an estimated position of the target node based on the known locations of the reference nodes and the respective time differential for each observed two-way time of flight transaction.

Example 6 includes the communication system of Example 5, wherein the target node is configured to calculate an estimated position of the target node by solving a system of equations in which each of the equations in the system of equations is arranged to be dependent on the same unknown value representing a time of flight between the target node and a first reference node of the at least three references nodes.

Example 7 includes the communication system of any of Examples 1-6, wherein the target node is configured to communicate the respective time differential determined for each observed two-way time of flight transaction to one or more of the reference nodes.

Example 8 includes a method of determining a physical position of a target node in a wireless network, the method comprising: observing, at the target node, at least three request signals transmitted from a respective requesting reference node to a respective responding reference node, each requesting reference node and responding reference node having a known location; observing, at the target node, at least three reply signals corresponding to a respective one of the at least three request signals, the at least three reply signals transmitted from a respective responding reference node such that the target node observes at least three distinct two-way time of flight transactions; and determining, at the target node, a respective differential time of flight measurement for each two-way time of flight transaction, each respective differential time of flight measurement indicating the time between observing a respective one of the at least three request signals and observing the corresponding one of the at least three reply signals.

Example 9 includes the method of Example 8, wherein each of the requesting reference nodes and the responding reference nodes has a fixed known position.

Example 10 includes the method of any of Examples 8-9, further comprising: obtaining, at the target node, the known position of each of the requesting reference nodes and the responding reference nodes from signals transmitted from the corresponding requesting reference nodes and responding reference nodes.

Example 11 includes the method of any of Examples 8-10, further comprising: calculating, at the target node, an estimated time of flight between the reference nodes of each two-way time of flight transaction based on the known locations of the reference nodes.

Example 12 includes the method of any of Examples 8-11, further comprising: transmitting a signal from the respective requesting reference node for each two-way time of flight transaction after receiving a reply from the corresponding responding reference node, the signal containing a respective round trip delay; obtaining, at the target node, the calculated round trip delay from the signal.

Example 13 includes the method of any of Examples 8-12, further comprising: calculating, at the target node, the physical position of the target node based on the respective differential time of flight measurement for each two-way time of flight transaction and on the known position of each requesting reference node and the known position of each responding reference node.

Example 14 includes the method of any of Examples 8-13, further comprising: communicating the respective time differential determined for each observed two-way time of flight transaction from the target node to one or more of the reference nodes.

Example 15 includes the method of any of Examples 8-14, wherein each of the at least three request signals comprises a range request signal.

Example 16 includes a program product comprising a processor-readable medium on which program instructions are embodied, wherein the program instructions are configured, when executed by at least one programmable processor in a target node having an unknown location, to cause the at least one programmable processor to: observe at least three two-way time of flight transactions, wherein each two-way time of flight transaction includes a request sent from one of a plurality of reference nodes and reply sent from another of the plurality of reference nodes, each reference node having a known location; and determine a respective differential time of flight measurement for each two-way time of flight transaction, each respective differential time of flight measurement indicating the time between observing the respective request and corresponding reply for each respective two-way time of flight transaction.

Example 17 includes the program product of Example 16, wherein the program instructions are further configured to cause the at least one programmable processor to obtain the known location of each of the plurality of reference nodes from signals transmitted from the corresponding reference nodes.

Example 18 includes the program product of any of Examples 16-17, wherein the program instructions are further configured to cause the at least one programmable processor to calculate an estimated time of flight between the reference nodes of each two-way time of flight transaction based on the known locations of the reference nodes.

Example 19 includes the program product of any of Examples 16-18, wherein the program instructions are further configured to cause the at least one programmable processor to obtain a respective calculated round trip delay for each two-way time of flight transaction from a signal transmitted from one or more of the reference nodes.

Example 20 includes the program product of any of Examples 16-19, wherein the program instructions are further configured to cause the at least one programmable processor to calculate a physical position of the target node based on the respective differential time of flight measurement for each two-way time of flight transaction and on the known location of the plurality of reference nodes.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

**Claims**

1. A communication system (100) comprising:

   a target node (104) having an unknown location; and
   at least three reference nodes (102) within communication range of the target node (104), each of the reference nodes (102) having a known location;
   wherein at least one of the reference nodes (102) is configured to initiate a two-way time of flight transaction with one or more of the other reference nodes (102) by transmitting a respective request to the one or more other reference nodes (102);
   wherein each of the reference nodes (102) is configured to transmit a reply in response to a received request;
   wherein the target node (104) is configured to observe the request and reply of each two-way time of flight transaction;
   wherein the target node (104) is further configured to determine a respective time
   differential between when the target node (104) received each respective request and its corresponding reply of each observed two-way time of flight transaction, optionally wherein each of the reference nodes (102) has a known fixed location.

2. The communication system (100) of claim 1, wherein the target node (104) is configured to calculate an estimated distance between the reference nodes (102) based on the known locations of the reference nodes (102).

3. The communication system (100) according to any preceding claim, wherein each of the reference nodes (102) which initiates a two-way time of flight transaction is configured to transmit a signal containing a respective round trip delay after receiving a reply from the corresponding reference node (102);
   wherein the target node (104) is configured to obtain the calculated round trip delay from the signal and to use the calculated round trip delay in estimating a distance between the respective reference nodes (102) corresponding to the round trip delay.

4. The communication system (100) of any preceding claim, wherein the target node (104) is further configured to calculate an estimated position of the target node (104) based on the known locations of the reference nodes (102) and the respective time differential for each observed two-way time of flight transaction.

5. The communication system (100) of claim 4, wherein the target node (104) is configured to calculate an estimated position of the target node (104) by solving a system of equations in which each of the equations in the system of equations is arranged to be dependent on the same unknown value representing a time of flight between the target node (104) and a first reference node (102) of the at least three reference nodes (102).

6. The communication system (100) of any preceding claim, wherein the target node (104) is configured to communicate the respective time differential determined for each observed two-way time of flight transaction to one or more of the reference nodes (102).

7. A method (300) of determining a physical position of a target node (104) in a wireless network, the method (300) comprising:

   observing (302), at the target node (104), at least three request signals transmitted from a respective requesting reference node (102) to a respective responding reference node (102), each requesting reference node (102) and responding reference node (102) having a known location;
   observing (304), at the target node (104), at least three reply signals corresponding to a respective one of the at least three request signals, the at least three reply signals transmitted from a respective responding reference node (102) such that the target node (104) observes at least three distinct two-way time of flight transactions; and

determining (306), at the target node (104), a respective differential time of flight measurement for each two-way time of flight transaction, each respective differential time of flight measurement indicating the time between observing a respective one of the at least three request signals and observing the corresponding one of the at least three reply signals, optionally wherein each of the requesting reference nodes (102) and the responding reference nodes (102) has a fixed known position.

8. The method (300) of claim 7, further comprising:

obtaining, at the target node (104), the known position of each of the requesting reference nodes (102) and the responding reference nodes (102) from signals transmitted from the corresponding requesting reference nodes (102) and responding reference nodes (102).

9. The method (300) of claim 7 or claim 8, further comprising:

calculating (308), at the target node (104), an estimated time of flight between the reference nodes (102) of each two-way time of flight transaction based on the known locations of the reference nodes (102).

10. The method (300) of any one of claims 7 to 9, further comprising:

transmitting a signal from the respective requesting reference node (102) for each two-way time of flight transaction after receiving a reply from the corresponding responding reference node (102), the signal containing a respective round trip delay;
obtaining, at the target node (104), the calculated round trip delay from the signal.

11. The method (300) of any one of claims 7 to 10, further comprising:

calculating, at the target node (104), the physical position of the target node (104) based on the respective differential time of flight measurement for each two-way time of flight transaction and on the known position of each requesting reference node (102) and the known position of each responding reference node (102).

12. The method (300) of any one of claims 7 to 11, further comprising:

communicating the respective time differential determined for each observed two-way time of flight transaction from the target node (104) to one or more of the reference nodes (102).

13. The method (300) of any one of claims 7 to 12, wherein each of the at least three request signals comprises a range request signal.

14. A program product comprising a processor-readable medium on which program instructions are embodied, wherein the program instructions are configured, when executed by at least one programmable processor (201) in a target node (104) having an unknown location, to cause the at least one programmable processor (201) to:

observe (302, 304) at least three two-way time of flight transactions, wherein each two-way time of flight transaction includes a request sent from one of a plurality of reference nodes (102) and reply sent from another of the plurality of reference nodes (102), each reference node (102) having a known location; and
determine (306) a respective differential time of flight measurement for each two-way time of flight transaction, each respective differential time of flight measurement indicating the time between observing the respective request and corresponding reply for each respective two-way time of flight transaction.

15. The program product of claim 14, wherein the program instructions are further configured to perform at least one of the following to cause the at least one programmable processor (201):

a) to obtain the known location of each of the plurality of reference nodes (102) from signals transmitted from the corresponding reference nodes (102),
b) to calculate (308) an estimated time of flight between the reference nodes (102) of each two-way time of flight transaction based on the known locations of the reference nodes (102),
c) to obtain a respective calculated round trip delay for each two-way time of flight transaction from a signal transmitted from one or more of the reference nodes (102), and

d) to calculate a physical position of the target node (104) based on the respective differential time of flight measurement for each two-way time of flight transaction and on the known location of the plurality of reference nodes (102).

FIG. 1A

FIG. 1B

FIG. 1C

FIG. 1D

EP 2 988 146 A1

FIG. 1E

FIG. 2

EP 2 988 146 A1

FIG. 3

Europäisches
Patentamt

European
Patent Office

Office européen
des brevets

**EUROPEAN SEARCH REPORT**

Application Number

EP 15 17 9439

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/314587 A1 (CURTICAPEAN FLOREAN [FI]) 13 December 2012 (2012-12-13)<br>* paragraph [0026]; figures 1, 2 *<br>* paragraph [0027] *<br>* paragraph [0020] *<br>* paragraph [0017] *<br>* paragraph [0015] *<br>* paragraph [0016] *<br>* paragraph [0049] *<br>* paragraph [0014] *<br>* paragraph [0018] *<br>* paragraph [0029] *<br>* paragraph [0022] *<br>* paragraph [0073] *<br>----- | 1-15 | INV.<br>G01S5/02<br>G01S5/06<br><br>ADD.<br>G01S13/87<br>G01S13/74 |
| X | US 2012/087272 A1 (LEMKIN MARK [US] ET AL) 12 April 2012 (2012-04-12)<br>* paragraph [0002]; figures 3-8 *<br>* paragraph [0017] *<br>* paragraph [0034] *<br>* paragraph [0040] *<br>----- | 1-15 | |

TECHNICAL FIELDS
SEARCHED      (IPC)

G01S

The present search report has been drawn up for all claims

| Place of search | Date of completion of the search | Examiner |
|---|---|---|
| Munich | 20 November 2015 | Beer, Mark |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P04C01)

**EP 2 988 146 A1**

## ANNEX TO THE EUROPEAN SEARCH REPORT
## ON EUROPEAN PATENT APPLICATION NO.

EP 15 17 9439

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2015

| Patent document cited in search report | | Publication date | Patent family member(s) | | Publication date |
|---|---|---|---|---|---|
| US 2012314587 | A1 | 13-12-2012 | US | 2012314587 A1 | 13-12-2012 |
| | | | WO | 2012170046 A1 | 13-12-2012 |
| US 2012087272 | A1 | 12-04-2012 | US | 8102784 B1 | 24-01-2012 |
| | | | US | 2012087272 A1 | 12-04-2012 |

EPO FORM P0459

For more details about this annex : see Official Journal of the European Patent Office, No. 12/82